# EUROPEAN PATENT SPECIFICATION

(11) **EP 0 607 484 B1**
(45) Date of publication and mention of the grant of the patent: **09.09.1998**
(21) Application number: 93100817.1
(22) Date of filing: 20.01.1993
(51) Int. Cl.: H04N 7/30

(54) **Method and device for encoding and decoding image data**
Verfahren und Vorrichtung zur Codierung und Decodierung von Bilddaten
Méthode et dispositif pout le codage et le décodage de données d'image

(43) Date of publication of application: 27.07.1994
(73) Proprietor: SAMSUNG ELECTRONICS CO. LTD., Suwon-city, Kyounggi-do (KR)
(72) Inventor: JEONG, Je-Chang, Yangjae-dong, Soecho-ku, Seoul (KR)
(74) Representative: Grünecker, Kinkeldey, Stockmair & Schwanhäusser Anwaltssozietät

(56) References cited:
- SIGNAL PROCESSING: IMAGE COMMUNICATION vol. 4, no. 4/5, August 1992, AMSTERDAM pages 379 - 387 YOSHIMICHI OHTSUKA ET AL 'Development of 135 Mbit/s HDTV codec'
- IEEE TRANSACTIONS ON CONSUMER ELECTRONICS vol. 38, no. 1, February 1992, NEW YORK pages XVIII - XXXIV GREGORY K. WALLACE ET AL 'The JPEG Still Picture Compression Standard'

## Description

### BACKGROUND OF THE INVENTION

### Field of the Invention

The invention relates to an improved method of encoding and decoding image data and to an improved encoding and decoding device for a digital image signal.

### Description of the Prior Art

Typically, in such a digital image processing system, a compression of digital image signal band is needed in order to improve an image signal transferring efficiency. Such a compression of the digital image signal is substantially executed in such a way that an image signal input of a time region is transfomed into a signal of a frequency region. As a result, most of image energies are condensed into some of transfrom coefficients of N × N blocks. The transfrom coefficients having a lowely distributed energy are converted to "0" on the reference to a predetermined threshold value so as to extend a matrix of "0" as much as possible. The coefficients condensed are converted into a series of data stream by way of a fixed scanning method such as a zigzag scanning method. That is, for transform coefficients out of "0" , the number of 0 (i.e., runlength) is counted between the transform coefficients to transfer a column (runlength, amplitude) of the image data and an end of block (EOB) bit follows the last transform coefficient in the block. In the terms "0" following the last transform coefficient, the value "0" is not considered as practical data and, alternatively, only the number of the value "0" is transferred to establish the desired data compression. In this case, the scanning to the image data is effected by using a zigzag scanning method as previously described.

An apparatus for carrying out such a compression on still pictures is known from "The JPEG still picture compression standard" published by G. Wallace in IEEE Transactions on Consumer Electronics, Vol. 38, No. 1, February 1992.

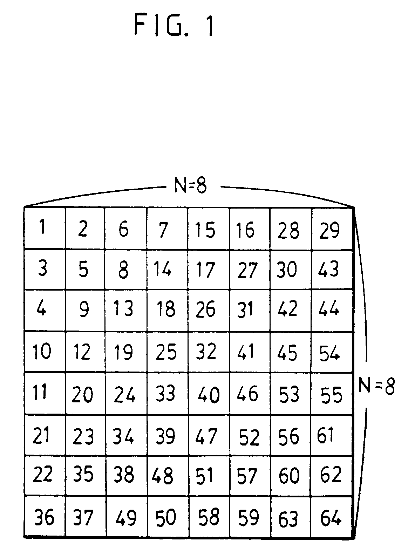

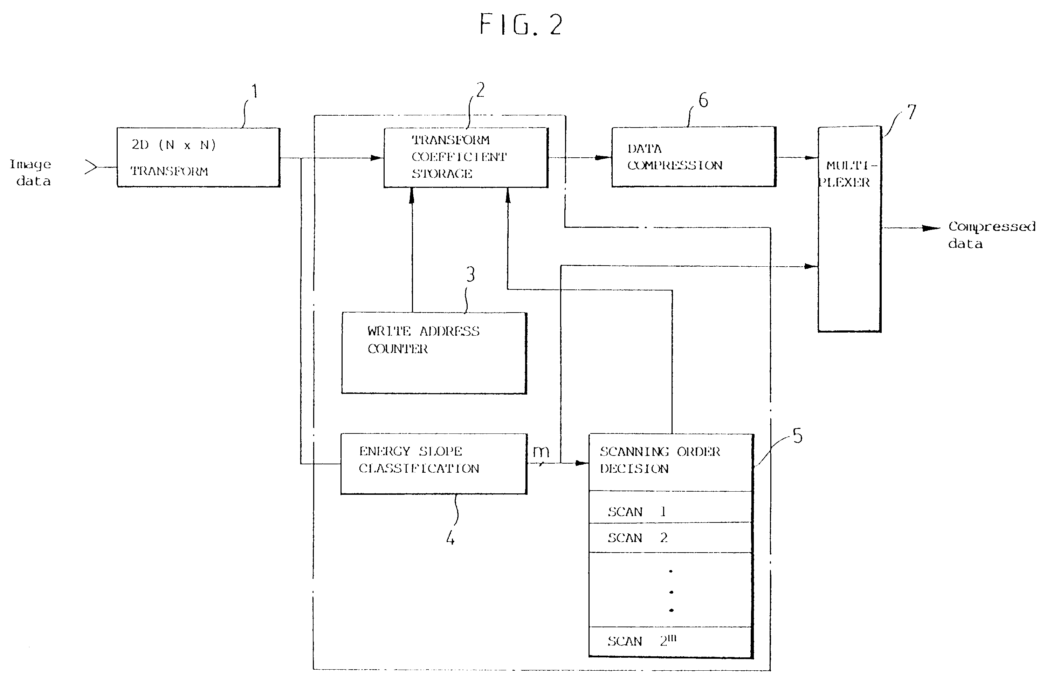

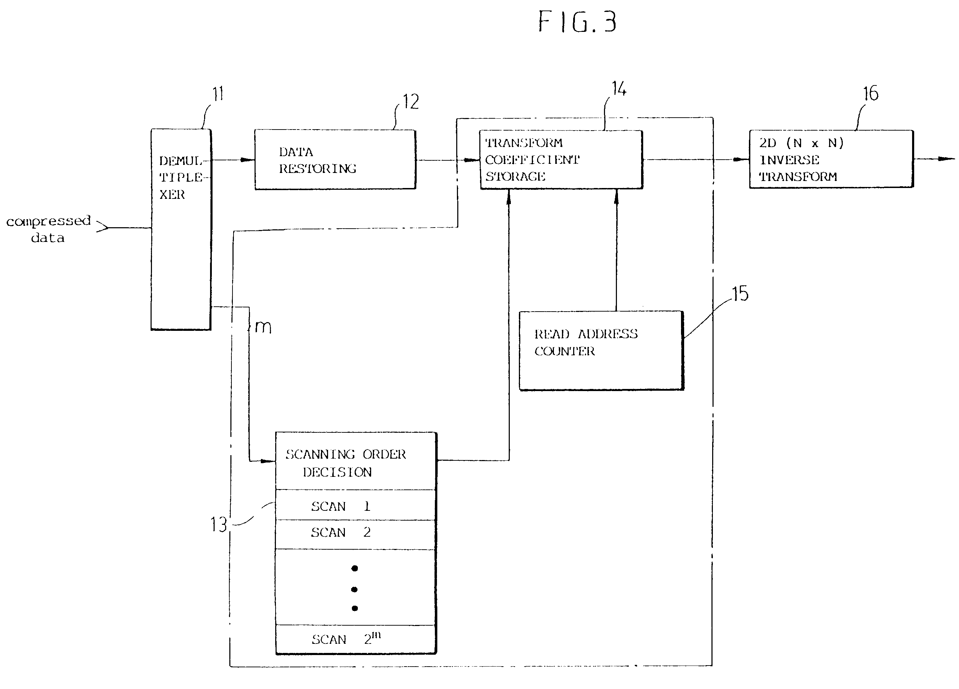

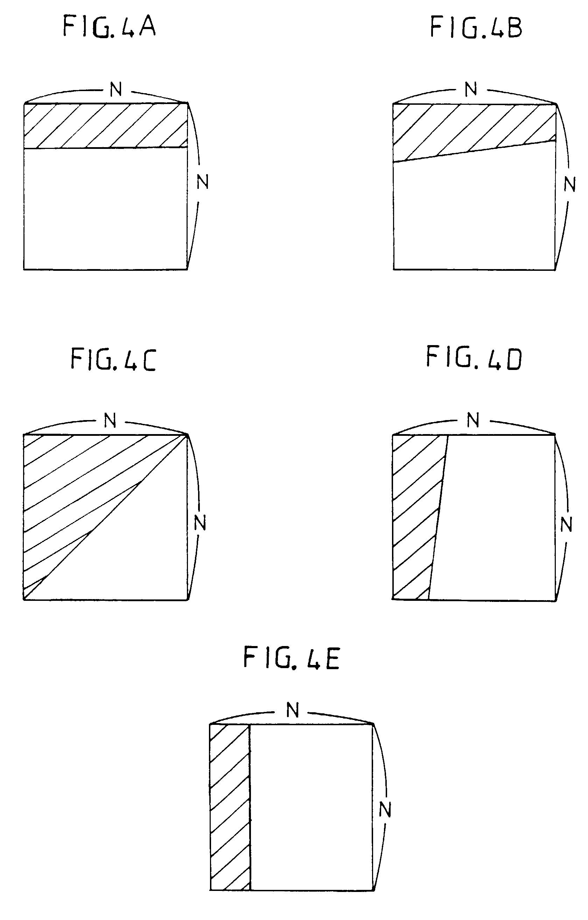

Fig. 1 illustrates an example of the zigzag scanning method, in which N is set to eight and numerals in the block denote the scanning order.

In this example of Fig. 1, the transform coefficients are partially distributed in a horizontal, vertical or diagonal direction in accordance with the practical image pattern. For this reason, when the image data is scanned by the zigzag scanning method, the EOB bit is not quickly produced. This causes a problem that the data compressing efficiency is likely to be limited because the number of the value "0" following the EOB bit is transferred to compress the image data.

For improving the efficiency of coding/data compression, it is described in "Development of 135 Mbits/s HDTV codec" published by Ohtsuka et al. in Signal Processing Image Communication, Vol. 4, No. 4/5, August 1992, to scan transform coefficients by adaptively using a zig-zag, horizontally orientated or vertically orientated scanning path.

It is the object of the invention to provide an image processing technique which improves the efficiency of coding/data compression.

This object is achieved by the technical teaching of claim 1 for a method of encoding and decoding image data and by claim 3 for a device for encoding and decoding a digital image signal.

The above object, features and advantages of the invention will be apparent from the following description taken with reference to the accompanying drawings.

### BRIEF DESCRIPTION OF THE DRAWINGS

Fig. 1 is a view showing an example of a conventional scanning method ;
Fig. 2 is a block diagram of an examplary construction of an encoding unit employed with a scanning device according to the present invention ;
Fig. 3 is a block diagram of an examplary construction of a decoding unit employed with a scanning device according to the present invention ;
Fig. 4A through 4E are views showing examplary image energy distribution patterns of arbitrary transform coefficient ;
Fig. 5 is a view illustrating slopes in a scanning direction of image energy distribution ; and,
Fig. 6A through 6D are views illustrating scanning orders according to the present invention.

### DETAILED DESCRIPTION OF THE INVENTION

Now, a preferred embodiment of the present invention will be described in detail.

Referring to Fig. 2, an example of an encoder employed with a scanning device according to the present invention. In the drawing, a two-dimension (2D) transform portion 1 transforms digital image input or image input signal into transform coefficients of N × N block an a frequency region. The image input signal is considered as error component estimated through a differential pulse code modulation (DPCM) loop. A transform coefficient storage portion 2 stores the transform coefficient output of the 2D transfrom portion 1 in accordance with an output signal of a write address counter 3. The transform coefficient storage portion 2 may be preferably concreted by a video RAM. An energy slope classification portion 4 identifies the energy distribution pattern of the transform coefficient supplied from the 2D transform portion 1 and outputs m-bit slope data corresponding to the slope of each of the patterns. A scan order decision portion 5 stores 2^{m} scan orders corresponding to the slope data and selectively outputs the scan order corresponding to the m-bit slope data supplied from the energy slope classification portion 4 to the transform coefficient storage portion 2. More specifically, the scan order decision portion 5 has addresses for the different 2^{m} scan orders and outputs any one address corresponding to the m-bit slope data outputted from the energy slope classification portion 4 so as to sequentially output the transform coefficients stored in the transfrom coefficient storage portion 2. Preferably, the scan order decision portion 5 is formed from a read only memory (ROM).

A data compression portion 6 quantizes the transform coefficients sequentially outputted in accordance with the address supplied from the scan order decision portion 5 and compresses the quantized transform coefficient data by using a vairable length coding. The data compression portion 6 has a buffer builted therein and decides a quantization step size in accordance with the fullness state of the buffer.

A multiplexer 7 selectively outputs the compressed data supplied from the data compression portion 6 and the slope data from the energy slope classification portion 4.

Fig. 3 shows a block diagram of an examplary decoding unit or decoder employed with a scanning device according to the present invention. In the drawing, a demultiplexer 11 classifies the compressed data and the slope data from the outupt data of the multiplexer 7 shown in Fig. 2, and a data restoring portion 12 restores the data compressed by the data compression portion 6 (Fig. 2) into an original transform coefficient data. A scan order decision portion 13 has 2^{m} scan order data stored therein and selectively outputs the scan order corresponding to the m-bit slope data classified by the demultiplexer 11 to an inverse transfrom coefficient storage portion 14. More specifically, the scan order decision portion 13 has addresses for the different 2^{m} scan order data and selectively output any one address corresponding to m-bit slope data outputted from the demultiplexer 11 to the transform coefficient storage portion 14. The scan order decision portion 13 is preferably formed from a ROM. The transform coefficient storage portion 14 rearranges the transform coeffcients outputted from the data restoring portion 12 in accordance with the address of the scan order decision portion 13 into the transform coefficients of N X N block and stores the rearranged transform coefficients. The transform coefficient storage portion 14 sequentially outputs the rearranged transform coefficients in accordance with the address supplied from a read address counter 15. The inverse transform coefficient storage portion 14 is preferably formed from a video RAM.

A two-dimension inverse transform portion 16 converts the transform coefficients outputted from the transfrom coefficient storage portion 14 to original image signal (i.e., digital image input or error component extimated through a DPCM loop).

Now, the method of and apparatus for scanning image data with use of two-dimensional data energy distribution will be described in detail.

In Fig. 2, the digital image input or image input signal considering as the estimated error component passed through the DPCM loop is converted to the transform coefficients of N × N (for example, N in this example is set to eight) block of a frequency region by the 2D transform portion 1. The transform coefficient output of the 2D transform portion 1 is stored into the transform coefficient storage portion 2 in accordance with the address signal supplied form the write address energy counter 3.

Further, the transform coefficient is supplied from the 2D transform portion 1 to the energy slope classification portion 4 which indentifies the transfrom coefficient energy distribution pattern and outputs m-bit slop data according to the energy distribution data thus identified.

Figs. 4A through 4E are views showing various examples of image energy distribution patterns in arbitrary transform coefficient array (N × N) in which oblique line portions denote energy distribution pattern. More specifically, in Fig. 4A the transform coefficient energy is horizotally distributed at an upper area of the block.

Fig. 4B shows a case in that the transform coefficient energy outputted from the 2D transfrom portions 1 is horizontally distributed and inclined to the left in the block. Fig. 4C illustrates an example of the transform coefficient energy distributed in a diagonal direction of the block. Also, Fig. 4D shows a case in that the transform coefficient energy outputted from the 2D transform portion 1 is vertically distributted and slanted to the upper side of the block. Fig. 4E denotes an example of the transform coefficient vertically distributed at the left side of the block.

More speifically, the energy slope classification portion 4 classifies the energy distribution pattern of the transfrom coefficients outputted from the 2D transfrom portion 1 into 2^{m} slopes and outputs the classified energy distribution patterns as m-bit slope data. In this case, as the slope information is increased, the compression efficiency can be improved. But, the slope information must be transferred to a decoders so as to be employed in decoding the encoded data. Therefore, it is undesirably to increase the number of the slope data bit without limitation. Preferably, the slope data is generally set to three or four bits.

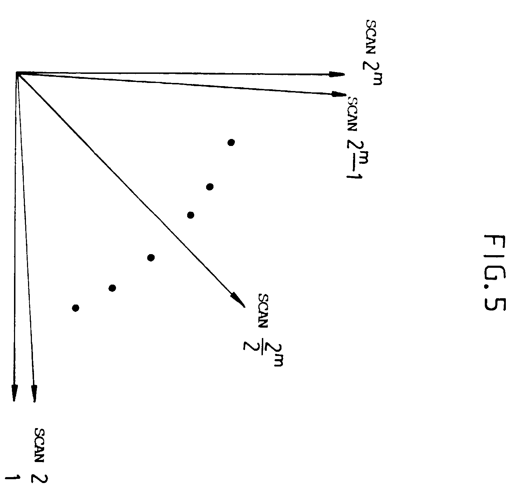

Fig. 5 shows the slopes in scanning direction to the image energy distribution. If the transform coefficient energy distribution pattern as shown in Fig. 4A is outputted from the 2D transform portion 1, then the slope data scanning 1 in Fig. 5 is produced by the energy slope classification portion 4. If the energy distribution pattern shown in Fig. 4B is obtained from the the 2D transform portion 1, then the slope data scan 2 as shown in Fig. 5 is obtained.

Similarly, when the energy of the transform coefficients outputted from the 2D transform portion 1 is distributed in a pattern shown in Fig. 4C, the energy slope classification portion 4 outputs a slope data "scan 2^{m}/2" in Fig. 5.

Alternatively, when the energy pattern is obtained as shown in Fig. 4E, the slope data " scan 2^{m}" is produced by the energy slope classification portion 4.

The scanning order storage portion 5, in which the 2^{m} scanning order data are previously stored, selectes any one scanning order according to the m-bit slope data supplied from the energy slope classification portion 4 and outputs an address corresponding to the selected scanning order. The address signal thus produced serves as a read address for the transform coefficient storage portion 2. Accordingly, the transform coefficients stored in the transform coeficient storage portion 2 are sequentially outputted in accordaince with the address signal (i.e., read address) supplied from the scanning order storage portion 5. That is, if the energy distribution of the transform coefficient outputted from the 2D transform portion 1 is in a pattern shown in Fig. 4A, then the energy slope classification portion 4 outputs the m-bit slope imformation scanning 1 and the scanning order deciding portion 5 produces an address according to the m-bit slope data to read the transform coefficient stored in the transform coefficient storage portion 2.

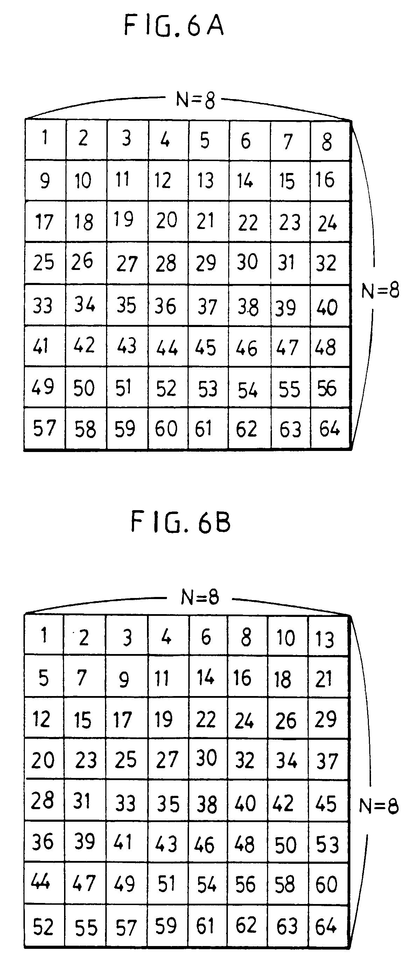

In other words, the transform coefficient stored in the transform coefficient storage portion 2 is read in accordance with the read address supplied from the scanning order decision portion 5 in the order shown in Fig. 6A in which numerals denote the scanning order.

While the energy distribution of the transform coefficients in the 2D transform portion 1 is in a pattern shown in Fig. 4B, the energy slope classification portion 4 produces the m-bit slope data " scanning 2 " in Fig. 5, and the scannng order decision portion 5 thus outputs the address corresponding to the m-bit slope data so as to read the transform coefficient stored in the transform coefficient storage portion 2. Namely, the transform coefficients stored in the storage portion 2 are read in the order shown in Fig. 6B under the read address supplied from the scanning order decision portion 5. In Fig. 6B numerals denote the scanning order.

Assuming that the energy of the transform coefficients outputted from the 2D transform portion 1 is distributed in a pattern shown in Fig. 4C, the energy slope classification portion 4 outputs the m-bit slope data " scannig 2^{m}/2" in Fig. 5 and the scanning order decision portion 5 produces the address corresponding to the m-bit slope data so as to read the transform coefficients in the transform coefficient storage portion 2. In this case, the transform coefficients in the transform coefficient storage portion 2 are read in the order (zigzag scanning) described in Fig. 1 by the read address supplied from the scanning order decision portion 5.

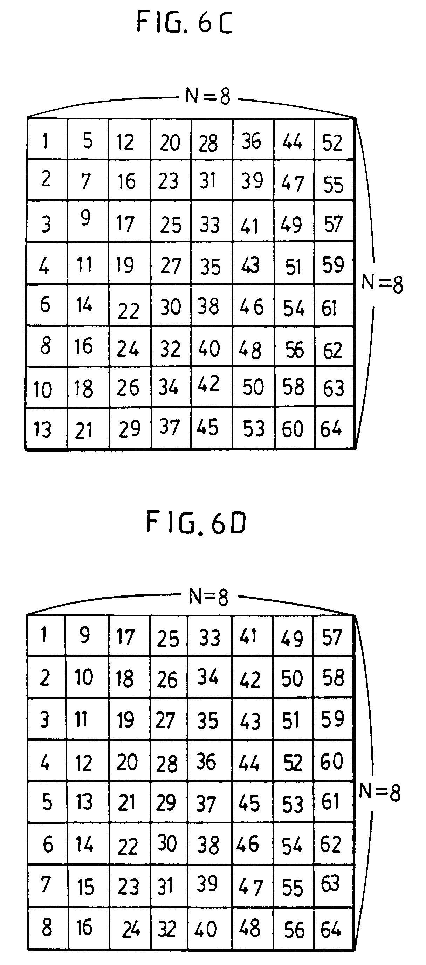

Furthermore, when the energy distribution of the transform coefficient is in a pattern in Fig. 4D, the energy slope classification portion 4 ouptuts a m-bit slope data " scanning 2^{m}-1" in Fig. 5 and the scanning order decision portion 5 thus produces an address corresponding to the m-bit slope data to read the transform coefficients stored in the transform coefficient storage portion 2 in the order illustrated in Fig. 6C in which numberals denote the scanning order. Alternatively, if the distribution in energy of the transform coefficients is in a pattern shown in Fig. 4E, the energy slope classification portion 4 outputs a m-bit slope data " scanning 2^{m}" and the scanning order decision portion 5 produces an address corresponding to the slope data so as to read the transform coefficients in the transform coefficient storage portion 2 in the order illustrated in Fig. 6D in which numerals denote the scanning order.

The transform coefficients thus read are entered to the data compression portion 6. Accordingly, in the data compressing portion 6 the coefficients are quantized and subjected to a variable length coding so as to achieve a desired data compression. Of course, the data outputted from the data compression portion 6 includes the column (runlength, amplitude) defined by a size of an amplitude and the number of "0" between the coefficients, and an EOB bit. Therefore, the EOB bit can be rapidly obtained as comparied with other scanning order.

The multiplexer 7 functions to selectively output the compressed data from the the data compression portion 6 and the m-bit slope data from the energy slope classification portion 4.

The data compressed by the encoder of Fig. 2 is entered to the decoder shown in Fig. 3. More opecifically, the compressed data is first entered to a demultiplexer 11 in the decoder, which separates the compressed data and the slope data outputted from the multiplexer 7 of Fig. 2. The data restoring portion 12 restores the compressed data to original data (transform coefficient). The scannig order decision portion 13 receives the m-bit slope data separated by the demultiplexer 11 and selects a scanning order corresponding to the slope data from the 2^{m} scanning orders previously stored therein. The scanning order thus selected is supplied to the inverse-transformed coefficient storage portion 14. Consequently, the transform coefficients outputted from the data restoring portion 12 are rearranged to the transform coefficients of N × N block on the basis of the address supplied from the scanning order decision portion 13 and stored in the inverse-transformed coefficient storage portion 14. The transform coefficients stored in the inverse-transformed coefficient storage portion 14 are sequentially outputted in accordance with the address supplied from the read address counter 15. Subsequently, the transform coefficients are supplied to the 2D inverse transform portion 16. Accordingly, so as to obtain original signal (digital image input or error component estimated through the DPCM loop).

As described above, when the transform coefficients are distributed slantwise in any one direction according to the image pattern, the scanning direction is selected in conforming to the distribution of the transform coefficients so as to quickly obtain the EOB bit. As a result, the image data can be compressed effectively, thereby improving the compressed data transferring efficiency.

Meanwhile the present invention has been described with respect to energy distribution classified in a linear function in a slope direction, but it may be considered that the energy distribution is classified in a non-linear pattern.

Although the present invention has been described to the speific embodiment, it will be understood that various changes and modifications may be made therein without departing from the scope of the invention.

## Claims

1. A method of encoding and decoding image data, comprising the steps of:
transforming an image signal on a block basis from a time domain into a frequency domain, each block having N x N transform coefficients in said frequency domain;
adaptively scanning said transform coefficients;
compressing and transferring the scanned transform coefficients;
restoring the compressed transform coefficients and rearranging the restored transform coefficients into an original order;
transforming said rearranged N x N transform coefficients from the frequency domain into the time domain;
**characterized in that**
said adaptive scanning of said transform coefficients before compressing and transferring said scanned coefficients comprises the steps of:
extracting slope data (m) in accordance with the energy distribution pattern of said transform coefficients in said N x N block;
scanning said transform coefficients in a scanning order corresponding to said extracted slope data;
transferring said extracted slope data; and
said rearranging of said restored transform coefficients is carried out in accordance with said transferred slope data.

2. A method according to claim 1 **characterized in that** said slope data related to the energy distribution pattern is data for selecting any one of different scanning patterns by which an end of block EOB bit is assigned after the last transform coefficient.

3. An encoding and decoding device for a digital image signal,
the encoder comprising:
a transform portion (1) for transforming an image signal on a block basis from a time domain into a frequency domain, each block having N x N transform coefficients in said frequency domain;
an adaptive scanning portion (2-5) for adaptively scanning said transform coefficients;
a data compressing portion (6) for compressing the scanned transform coefficients;
means (7) for transferring said compressed transform coefficients;
the decoder comprising:
a restoring portion (12) for restoring said transform coefficients from said compressed transform coefficients;
a rearranging portion (13,14,15) for rearranging the restored transform coefficients into an original order;
an inverse transform portion (16) for transforming said rearranged N x N transform coefficients from the frequency domain into the time domain;
**characterized in that**
said adaptive scanning portion (2,4,5) comprising an energy classification portion (4) for extracting slope data (m) in accordance with the energy distribution pattern of said transform coefficients in said N x N block;
said adaptive scanning portion (2,4,5) scans said transform coefficients in a scanning order corresponding to said extracted slope data;
said means (7) for transferring said scanned transform coefficients is further transferring said extracted slope data; and
said rearranging portion (13,14,15) is rearranging said restored transform coefficients in accordance with said transferred slope data.

4. An encoding and decoding device according to claim 3, **characterized in that**
said transform portion (1) is converting the image imput signal as error components estimated through a differential pulse code modulation loop into transform coefficients of an N x N block of a frequency domain;
said data compression portion (6) quantizes the transform coefficients which are sequentially outputted from said adaptive scanning portion (2) and compressing the data by way of a variable length coding process;
said adaptive scanning portion further comprising:
a transform coefficient storage portion (2) for storing the transform coefficients being output of said two dimensional transform portion (1) in accordance with an output signal of a write address counter;
a scanning order decision portion (5) for selecting the scanning order corresponding to the slope data (m) outputted from the energy slope classification portion (4) and providing the selected scanning order to said transform coefficient storage portion (2), and
said means for transferring said scanned transform coefficients is provided by multiplexer (7) for selectively outputting the compressed data which is outputted by said data compression portion (6) and said slope data (m) which is outputted by said energy slope classification portion (4).

5. An encoding and decoding device according to claim 3 or 4, **characterized in that** said transform coefficient storage portion (2) is composed of a video RAM.

6. An encoding and decoding device according to claim 4 or 5, **characterized in that** said scanning order decision portion (5) has addresses corresponding to 2^{m} different scanning orders with respect to the m-bit slope data outputted from the energy slope classification portion (4).

7. An encoding and decoding device according to any of claims 4 to 6 **characterized in that** said scanning order decision portion is composed of a ROM.

8. An encoding and decoding device according to any of claims 3 to 7 **characterized in that** said decoder further comprising:
a demultiplexer (11) for separating the compressed data and the slope data transferred from the encoder, and
said rearranging portion comprising:
a scanning order decision portion (13) for receiving the slope data (m) separated by said demultiplexer (11) and selecting a scanning order corresponding to the slope data from the scanning order stored therein;
a read address counter (15); and
a transform coefficient storage portion (14) for rearranging the transform coefficients outputted from the data restoring portion (12) to the transform coefficients of a N x N block in accordance with the addresses supplied from the scanning order decision portion (13), for storing the rearranged transform coefficient and for sequentially outputting the transform coefficients by using the addresses supplied from a read address counter (15).

9. An encoding and decoding device according to claim 8, wherein said scanning order decision portion (13) has addressed corresponding to number 2^{m} different scanning orders with respect to the m-bit slope data.

10. An encoding and decoding device according to claim 8 or 9, **characterized in that** said scanning order decision portion (13) is composed of a ROM.

## Patentansprüche

1. Verfahren zur Codierung und Decodierung von Bilddaten mit den Schritten:
Transformierung eines Bildsignales auf einer Blockbasis von einem Zeitbereich in einen Frequenzbereich, wobei jeder Block N x N Transformationskoeffizienten in dem Zeitbereich aufweist;
adaptive Abtastung der Transformationskoeffizienten;
Komprimierung und Übertragung der abgetasteten Transformationskoeffizienten;
Wiederherstellung der komprimierten Transformationskoeffizienten und Anordnung der wiederhergestellten Transformationskoeffizienten in einer ursprünglichen Anordnung;
Transformierung der angeordneten N x N Transformationskoeffizienten von dem Frequenzbereich in den Zeitbereich,
**dadurch gekennzeichnet**, daß
die adaptive Abtastung der Transformationskoeffizienten vor der Komprimierung und Übertragung der abgetasteten Koeffizienten die Schritte umfaßt:
Extrahierung von Neigungsdaten (m) gemäß dem Energieverteilungsmuster der Transformationskoeffizienten in dem N x N Block;
Abtastung der Transformationskoeffizienten in einer Abtastreihenfolge, die den extrahierten Neigungsdaten entspricht;
Übertragung der extrahierten Neigungsdaten; und
die Anordnung der wiederhergestellten Transformationskoeffizienten gemäß den übertragenen Neigungsdaten ausgeführt wird.

2. Verfahren nach Anspruch 1, **dadurch gekennzeichnet**, daß die Neigungsdaten, die sich auf das Energieverteilungsmuster beziehen, Daten zur Auswahl eines von verschiedenen Abtastmustern sind, durch die ein "end of block" EOB Bit nach dem letzten Transformationskoeffizienten zugewiesen wird.

3. Codier- und Decodiervorrichtung für ein digitales Bildsignal,
wobei der Codierer umfaßt:
einen Transformationsabschnitt (1) zur Transformation eines Bildsignales auf einer Blockbasis aus einem Zeitbereich in einen Frequenzbereich, wobei jeder Block N x N Transformationskoeffizienten in dem Frequenzbereich aufweist;
einen adaptiven Abtastabschnitt (2-5) zur adaptiven Abtastung der Transformationskoeffizienten;
einen Datenkompressionsabschnitt (6) zur Kompression der abgetasten Transformationskoeffizienten;
eine Einrichtung (7) zur Übertragung der komprimierten Transformationskoeffizienten;
wobei der Decoder umfaßt:
einen Wiederherstellungsabschnitt (12) zur Wiederherstellung der Transformationskoeffizienten aus den komprimierten Transformationskoeffizienten;
einen Anordnungsabschnitt (13, 14, 15) zur Anordnung der wiederhergestellten Transformationskoeffizienten in einer ursprünglichen Reihenfolge;
einen inversen Transformationsabschnitt (16) zur Transformation der angeordneten N x N Transformationskoeffizienten aus dem Frequenzbereich in den Zeitbereich;
**dadurch gekennzeichnet**, daß
der adaptive Abtastabschnitt (2, 4, 5) einen Energieklassifikationsabschnitt (4) zur Extrahierung von Neigungsdaten (m) gemäß dem Energieverteilungsmuster der Transformationskoeffizienten in dem N x N Block umfaßt;
der adaptive Abtastabschnitt (2, 4, 5) die Transformationskoeffizienten in einer Abtastreihenfolge abtastet, die den extrahierten Neigungsdaten entspricht;
die Einrichtung (7) zur Übertragung der abgetasteten Transformationskoeffizienten außerdem die extrahierten Neigungsdaten überträgt; und
der Anordnungsabschnitt (13, 14, 15) die wiederhergestellten Transformationskoeffzienten gemäß den übertragenen Neigungsdaten anordnet.

4. Codierungs- und Decodierungsvorrichtung nach Anspruch 3, **dadurch gekennzeichnet**, daß
der Transformationsabschnitt (1) das Bildeingangssignal als Fehlerkomponenten, die über eine differentielle Pulscodemodulationsschleife geschätzt werden, in Transformationskoeffizienten eines N x N Blocks eines Frequenzbereichs umwandelt;
der Datenkompressionsabschnitt (6) die Transformationskoeffizienten quantisiert, die aufeinanderfolgend von dem adaptiven Abtastabschnitt (2) ausgegeben werden, und die Daten mittels eines variablen Längencodierungsvorgangs komprimiert;
der adaptive Abtastabschnitt außerdem umfaßt:
einen Transformationskoeffizientenspeicherabschnitt (2) zur Speicherung der Transformationskoeffizienten, die von dem zweidimensionalen Transformationsabschnitt (1) gemäß einem Ausgabesignal eines Schreibadressenzählers ausgegeben werden;
einen Abtastreihenfolgeentscheidungsabschnitt (5) zur Auswahl der Abtastreihenfolge entsprechend den Neigungsdaten (m), die von dem Energieneigungsklassifikationsabschnitt (4) ausgegeben werden, und zur Bereitstellung der ausgewählten Abtastreihenfolge an den Transformationskoeffizientenspeicherabschnitt (2) und
die Einrichtung zur Übertragung der abgetasteten Transformationskoeffizienten mit einem Multiplexer (7) zur aufeinanderfolgenden Ausgabe der komprimierten Daten, die von dem Datenkompressionsabschnitt (6) ausgegeben werden, und der Neigungsdaten (m) ausgestattet ist, die von dem Energieneigungsklassifikationsabschnitt (4) ausgegeben werden.

5. Codier- und Decodiervorrichtung nach Anspruch 3 oder 4, **dadurch gekennzeichnet**, daß der Transformationskoeffizientenspeicherabschnitt (2) aus einem Video-RAM besteht.

6. Codier- und Decodiervorrichtung nach Anspruch 4 oder 5, **dadurch gekennzeichnet**, daß der Abtastreihenfolgeentscheidungsabschnitt (5) Adressen enthält, die 2^{m} verschiedenen Abtastreihenfolgen in bezug auf m-Bit Neigungsdaten entsprechen, die von dem Energieneigungsklassifikationsabschnitt (4) ausgegeben werden.

7. Codier- und Decodiervorrichtung nach einem der Ansprüche 4 bis 6, **dadurch gekennzeichnet**, daß der Abtastreihenfolgeentscheidungsabschnitt aus einem ROM besteht.

8. Codier- und Decodiervorrichtung nach einem der Ansprüche 3 bis 7, **dadurch gekennzeichnet**, daß der Decoder außerdem umfaßt:
einen Demultiplexer (11) zur Trennung der komprimierten Daten und der Neigungsdaten, die von dem Codierer übertragen werden, und
der Anordnungsabschnitt umfaßt:
einen Abtastreihenfolgeentscheidungsabschnitt (13) zum Empfangen von Neigungsdaten (m), die von dem Demultiplexer (11) abgetrennt werden, und zur Auswahl einer Abtastreihenfolge entsprechend zu den Neigungsdaten aus den gespeicherten Abtastreihenfolgen;
einen Leseadresszähler (15); und
einen Transformationskoeffizientenspeicherabschnitt (14) zur Anordnung der Transformationskoeffizienten, die von dem Datenwiederherstellungsabschnitt (12) ausgegeben werden, zu Transformationskoeffizienzen eines N x N Blocks gemäß den Adressen, die von dem Abtastreihenfolgeentscheidungsabschnitt (13) weitergeleitet werden, zur Speicherung der angeordneten Transformationskoeffizienten und zur aufeinanderfolgenden Ausgabe der Transformationskoeffizienten durch Verwendung der Adressen, die von einem Leseadresszähler (15) weitergeleitet werden.

9. Codier- und Decodiervorrichtung nach Anspruch 8, wobei der Abtastreihenfolgeentscheidungsabschnitt (13) Adressen entsprechend zu den 2^{m} verschiedenen Abtastreihenfolgen hinsichtlich der m-Bit Neigungsdaten aufweist.

10. Codier- und Decodiervorrichtung nach Anspruch 8 oder 9, **dadurch gekennzeichnet**, daß der Abtastreihenfolgeentscheidungsabschnitt (13) aus einem ROM besteht.

## Revendications

1. Procédé de codage et de décodage de données d'image, comprenant les étapes de :
transformation d'un signal d'image par bloc depuis un domaine temporel dans un domaine de fréquence, chacun des blocs ayant N x N coefficients de transformation dans ledit domaine de fréquence ;
balayage adaptatif desdits coefficients de transformation ;
compression et transfert des coefficients de transformation balayés ;
restauration des coefficients de transformation compressés et réorganisation des coefficients de transformation restaurés dans un ordre original ;
transformation desdits N x N coefficients de transformation depuis le domaine de fréquence dans le domaine temporel ;
caractérisé en ce que
ledit balayage adaptatif desdits coefficients de transformation avant compression et transfert desdits coefficients balayés comprend les étapes de :
extraction des données de pente (m) en fonction de la forme de distribution d'énergie desdits coefficients de transformation dans ledit bloc N x N ;
balayage desdits coefficients de transformation dans un ordre correspondant auxdites données de pente extraites ;
transfert desdites données de pente extraites ; et
ladite réorganisation desdits coefficients de transformation restaurés est menée en conformité avec lesdites données de pente transférées.

2. Procédé selon la revendication 1 caractérisé en ce que lesdites données de pente relatives à ladite forme de distribution d'énergie sont des données destinées à sélectionner une des différentes formes de balayage selon laquelle un bit de fin de bloc EOB est affecté après le dernier coefficient de transformation.

3. Dispositif de codage et de décodage d'un signal d'image numérique,
le codeur comprenant :
une partie de transformation (1) destinée à transformer un signal d'image par bloc depuis un domaine temporel dans un domaine de fréquence, chacun des blocs ayant N x N coefficients de transformation dans ledit domaine de fréquence ;
une partie de balayage adaptatif (2-5) destinée au balayage adaptatif desdits coefficients de transformation ;
une partie de compression de données (6) destinée à compresser les coefficients de transformation balayés ;
un moyen (7) destiné à transférer lesdits coefficients de transformation compressés ;
le décodeur comprenant :
une partie de restauration (12) destinée à restaurer lesdits coefficients de transformation à partir des coefficients de transformation compressés ;
une partie de réorganisation (13, 14, 15) destinée à réorganiser les coefficients de transformation restaurés dans un ordre d'origine ;
une partie de transformation inverse (16) destinée à transformer lesdits N x N coefficients de transformation réorganisés depuis le domaine de fréquence dans le domaine temporel ;
caractérisé en ce que
ladite partie de balayage adaptatif (2, 4, 5) comprenant une partie de classification d'énergie (4) destinée à extraire des données de pente (m) en fonction de la forme de distribution d'énergie desdits coefficients de transformation dans lesdits N x N blocs ;
ladite partie de balayage adaptatif (2, 4, 5) balaye lesdits coefficients de transformation dans l'ordre de balayage correspondant auxdites données de pente extraites ;
ledit moyen (7) de transfert desdits coefficients de transformation balayés transfère en outre lesdites données de pente extraites ; et
ladite partie de réorganisation (13, 14, 15) réorganise lesdits coefficients de transformation restaurés en fonction desdites données de pente transférées.

4. Dispositif de codage et de décodage selon la revendication 3, caractérisé en ce que
ladite partie de transformation (1) convertit le signal d'entrée d'image sous la forme de composantes d'écart estimées au travers d'une boucle de modulation par impulsions codées différentielle en coefficients de transformation d'un bloc N x N d'un domaine de fréquence ;
ladite partie de compression de données (6) quantifie les coefficients de transformation qui sont produits en séquence à partir de la partie de balayage adaptatif (2) et compressant les données par le biais d'un processus de codage à longueur variable ;
ladite partie de balayage adaptatif comprenant en outre :
une partie de stockage de coefficients de transformation (2) destinée à stocker les coefficients de transformation produits par ladite partie de transformation en deux dimensions (1) conformément à un signal de sortie d'un compteur d'adresse d'écriture ;
une partie de décision d'ordre de balayage (5) destinée à sélectionner l'ordre de balayage correspondant aux données de pente (m) produites par la partie de classification de pente d'énergie (4) et à appliquer l'ordre de balayage sélectionné à ladite partie de stockage de coefficients de transformation (2), et
ledit moyen de transfert desdits coefficients de transformation balayés est appliqué par un multiplexeur (7) pour produire sélectivement les données compressées produites par ladite partie de compression de données (6) et lesdites données de pente (m) produites par ladite partie de classification de pente d'énergie (4).

5. Dispositif de codage et de décodage selon la revendication 3 ou 4, caractérisé en ce que ladite partie de stockage de coefficient de transformation (2) se compose d'une mémoire RAM vidéo.

6. Dispositif de codage et de décodage selon la revendication 4 ou 5, caractérisé en ce que ladite partie de décision d'ordre de balayage (5) dispose d'adresses correspondant à 2^{m} ordres différents de balayage relativement aux données de pente sur m bits produites par la partie de classification de pente d'énergie (4).

7. Dispositif de codage et de décodage selon l'une quelconque des revendications 4 à 6 caractérisé en ce que ladite partie de décision de balayage comporte une mémoire ROM.

8. Dispositif de codage et de décodage selon l'une quelconque des revendications 3 à 7 caractérisé en ce que ledit décodeur comporte en outre :
un démultiplexeur (11) destiné à séparer les données compressées et les données de pente transférées depuis le codeur, et
ladite partie de réorganisation comprenant :
une partie de décision d'ordre de balayage (13) destinée à recevoir les données de pente (m) séparées par ledit multiplexeur (11) et à sélectionner un ordre de balayage correspondant aux données de pente à partir de l'ordre de balayage qui y est stocké ;
un compteur d'adresses de lecture (15) ; et
une partie de stockage de coefficients de transformation (14) pour réorganiser les coefficients de transformation produits par la partie de restauration de données (12) en coefficients d'un bloc N x N en fonction des adresses fournies par la partie de décision d'ordre de balayage (13), afin de stocker le coefficient de transformation réorganisé et de produire en séquence les coefficients de transformation en utilisant les adresses fournies par un compteur d'adresse de lecture (15).

9. Dispositif de codage et de décodage selon la revendication 8, dans lequel ladite partie de décision d'ordre de balayage (13) a adressé en correspondance avec le nombre 2^{m} différents ordres de balayage relativement aux données de pente sur m bits.

10. Dispositif de codage et de décodage selon la revendication 8 ou 9, caractérisé en ce que ladite décision d'ordre de balayage (13) comporte une mémoire ROM.
